**Europäisches Patentamt**

**European Patent Office**

**Office européen des brevets**

(19)

(11) Veröffentlichungsnummer: **0 072 944**
**B1**

(12)

# EUROPÄISCHE PATENTSCHRIFT

(45) Veröffentlichungstag der Patentschrift:
**09.03.88**

(51) Int. Cl.⁴: **G 01 D 13/22**

(21) Anmeldenummer: **82107075.2**

(22) Anmeldetag: **05.08.82**

(54) Justiervorrichtung mit Exzenter für Zeiger von Messgeräten.

(30) Priorität: **08.08.81 DE 3131505**

(43) Veröffentlichungstag der Anmeldung:
**02.03.83 Patentblatt 83/9**

(45) Bekanntmachung des Hinweises auf die Patenterteilung:
**09.03.88 Patentblatt 88/10**

(84) Benannte Vertragsstaaten:
**AT CH IT LI NL**

(56) Entgegenhaltungen:
**GB - A - 1 358 746**
**US - A - 3 590 773**

**Industrial Fasteners Handbook, 2nd edition, April 1980,**
**Trade & Technical Press Ltd., England, pp. 356-438**

(73) Patentinhaber: **METRAWATT GMBH NÜRNBERG,**
**Thomas-Mann-Strasse 20, D-8500 Nürnberg (DE)**

(72) Erfinder: **Friedrich, Theo, von-Scheuerl-Strasse 1,**
**D-8560 Lauf (DE)**

(74) Vertreter: **Kempe, Wolfgang, Dr. et al, c/o BROWN,**
**BOVERI & CIE AG ZPT Postfach 351,**
**D-6800 Mannheim 31 (DE)**

**Beschreibung**

Die Erfindung betrifft eine Justiervorrichtung der im Oberbegriff des Anspruchs 1 genannten Art.

Nullstellelemente an Messgeräten sind in vielen verschiedenen Ausführungen bekannt geworden. Die Nullstellelemente sollen möglichst nicht gross sein, einfach in der Fertigung herstellbar, sowie leicht am Messgerät montierbar sein. Von der Aufgabe her ist das Nullstellelement um so besser, wenn es eine grosse Stellkraft am Zeiger erreicht und einen möglichst grossen Wegbereich des Zeigers abdecken kann, um bei einer Ungenauigkeit des Messgerätes den Zeiger aus allen denkbaren Lagen wieder in die Nullstellung einjustieren zu können. Bei vielen Messgeräten lässt es sich nicht vermeiden, dass der Zeiger in einer wesentlichen Distanz zum äusseren Schutzhülle des Messgerätgehäuses angeordnet ist. Da das Nullstellelement von aussen bedienbar sein muss, ohne das Gerät auseinander bauen zu müssen, bedeutet dies, dass ein langer Verstelldorn am Nullstellelement vorhanden sein muss.

Aus der DE-AS-1 916 898 ist eine Justiervorrichtung mit Exzenter bekannt, die zum Justieren der Null-Stellung eines Messwerkzeigers dient. Hierbei ist ein einstelliges Stellelement mit seinem zylindrisch geformten Führungsteil in einer Öffnung einer Frontscheibe des Messgerätes drehbeweglich angeordnet. Das Kopfteil dieses Stellelementes bildet eine Dichtfläche, mit der es auf der Aussenseite der Frontscheibe aufliegt. Ein am anderen Ende des zylindrischen Führungsteils exzentrisch angeordneter Verstelldorn wirk im Inneren des Messgerätes auf das am Messwerk ausgebildete, zu justierende Element ein. Nachteilig ist bei dieser Vorrichtung, dass das Stellelement nur durch Einfügen im Presssitz am Herausfallen gehindert werden kann. Die Drehbeweglichkeit des Stellelementes ist hierdurch stark eingeschränkt, so dass einerseits das Einstellen der Nullpunktlage relativ grosse Kräfte erfordert und andererseits eine geringe Einstellgenauigkeit erreichbar ist.

Eine bessere Selbsthaltung des Stellelementes in der Frontscheibe ist aus der US-A-3 590 773 bekannt. Hierbei ist das zylindrische Führungsteil mit einem Kragen versehen, der in einer Aussparung innerhalb der Frontscheibe Platz findet und das Stellelement am Herausfallen hindert. Im Prinzip ist mit dieser Ausführung eine leichtgängige Drehbeweglichkeit erreichbar. Schwierigkeiten müssen jedoch zwangsläufig beim Einsetzen des Stellelementes in die Frontscheibe auftreten, da der Kragen nicht nur das Herausfallen, sondern auch das Einsetzen des Stellelementes behindert. Im übrigen ist das Vorsehen einer Aussparung in der Frontscheibe fertigungstechnisch kompliziert.

Aufgabe der Erfindung ist es, eine Justiervorrichtung der im Oberbegriff des Anspruchs 1 genannten Art zu schaffen, die einfach am Gerät montierbar ist, eine gute Drehbeweglichkeit gewährleistet und ein Herausfallen des Stellelementes sicher verhindert.

Diese Aufgabe wird durch die im Patentanspruch 1 genannten Merkmale gelöst. Zweckmässige Ausgestaltungen und Weiterbildungen des Erfindungsgegenstandes sind in den abhängigen Patentansprüchen genannt.

Die wesentlichen Vorteile der Erfindung sind darin zu sehen, dass der zylindrische Führungsteil des Stellelementes eine gut geführte leichtgängige Drehbewegung ermöglicht. Die am zylindrischen Führungsteil befestigten federnden Haltestege erlauben durch ihre keil- oder kegelförmige Anordnung ein bequemes Einführen des Stellelementes in die Öffnung der Frontscheibe, wobei die federnden Haltestege zusammengedrückt werden. Nach dem Durchdringen der Öffnung sorgen hinter dieser, an den Haltestegen angeformte Schnappschrägen dafür, dass sich die Haltestege einerseits wieder etwas spreizen und andererseits mit Hilfe der Schnappschrägen auf der Rückseite der Frontscheibe verrasten. Somit wird die Justiervorrichtung durch einfaches Eindrücken des Stellelementes in die Frontscheibe des Messgerätes funktionsfähig. Das Kopfteil des Stellelementes liegt an der Aussenseite der Frontscheibe einer Dichtfläche auf und dichtet das Gerät gegen Verschmutzung von aussen ab. Das Stellelement ist gut von der Aussenseite erreichbar und mit einem Schraubendreher leicht zu betätigen.

Die Haltestege sind kreis- und stegförmig am Führungsteil des Stellelementes angeordnet und deren Aussenflächen werden zu einer Schnappkante im Durchmesser keilförmig grösser und von der Schnappkante bis zur Gesamthöhe der Haltestege im Durchmesser kleiner. Das leichte Montieren der Justiervorrichtung in die Frontscheibe des Messgerätes wird hierbei durch die Haltestege und deren Schnappkante erreicht. Die Haltestege sind entsprechend der Bohrung in der Frontscheibe kreisförmig ausgeführt. Sie stehen sich räumlich gesehen gegenüber, welches zu einer gleichmässigen Kraftübertragung nach der Montage beim Haltevorgang in der Frontscheibe führt. Während der Montage werden die Haltestege über die Schnappkante zusammengedrückt, bis die Justiervorrichtung mit seinem Führungsteil in der Endstellung eingerastet ist. Hierbei dichtet die federnd aufliegende Aussenfläche, die weit über die Bohrung der Frontscheibe hinausreicht, das Messgerät ab. Im Einbauzustand fixieren die kegelförmig grösser werdenden Haltestege die Justiervorrichtung in der Frontscheibe des Messgerätes.

Der Verstelldorn ist am Führungsteil axial gerichtet zwischen den Haltestegen befestigt. Bei dieser vorteilhaften ersten Ausführung der Justiervorrichtung ist der kräftige Verstelldorn bei räumlich engen Verhältnissen besonders günstig angeordnet. Der Verstelldorn ist kegelig und/oder stufig, wobei der Durchmesser nach oben hin kleiner wird. Die kegelige Ausführung des Verstelldorns lässt grosse Kraftübertragungen auch bei langen Verstelldornen zu.

Bei einer zweiten Ausführungsform der Justiervorrichtung ist am Führungsteil des Stellelements ein Verbindungssteg mittig befestigt, der in eine kreisförmige, parallel zum Führungsteil angeordnete Platte übergeht. Auf der ersten Seite der Platte sind in Richtung zur Dichtfläche Haltestege befestigt, die kurz vor der Dichtfläche in nach innen weisende kegelförmige Schnappschräge übergehen. Diese Ausführungsform verankert die Justiervorrichtung besonders günstig in der Frontscheibe des Messgerätes. Die Justiervorrichtung ist durch den flachen, mittig angeordneten Verbindungssteg besonders robust. Die Dichtfläche kann in diesem speziellen Fall sehr platzsparend ausgeführt werden. Der Montagevorgang lässt sich über die kegeligen, federnden Haltestege einfach ausführen. Die Schnappschrägen rasten nach der Montage hinter die Frontscheibe des Messgerätes und verankern die Justiervorrichtung lösbar.

Auf der zweiten Seite der Platte ist der Verstelldorn achsparallel aussermittig angeordnet. Der Verstelldorn kann hierbei wesentlich kürzer sein als in der ersten Version, da ein Teil des Abstandes schon durch den Verbindungssteg überbrückt ist.

Weitere Vorteile und Merkmale der Erfindung gehen aus der folgenden Beschreibung in Verbindung mit schematisch gezeigten Ausführungsbeispielen hervor.

Es zeigt:

Fig. 1 eine Draufsicht auf die Unterseite einer ersten Justiervorrichtung in einem Ausschnitt einer Frontscheibe,

Fig. 2 eine Seitenansicht der Justiervorrichtung in eingebautem Zustand im Schnitt,

Fig. 3 eine erste Seitenansicht einer zweiten Justiervorrichtung,

Fig. 4 ein um 90 Grad gegenüber der Fig. 3 gedrehte zweite Seitenansicht der zweiten Justiervorrichtung.

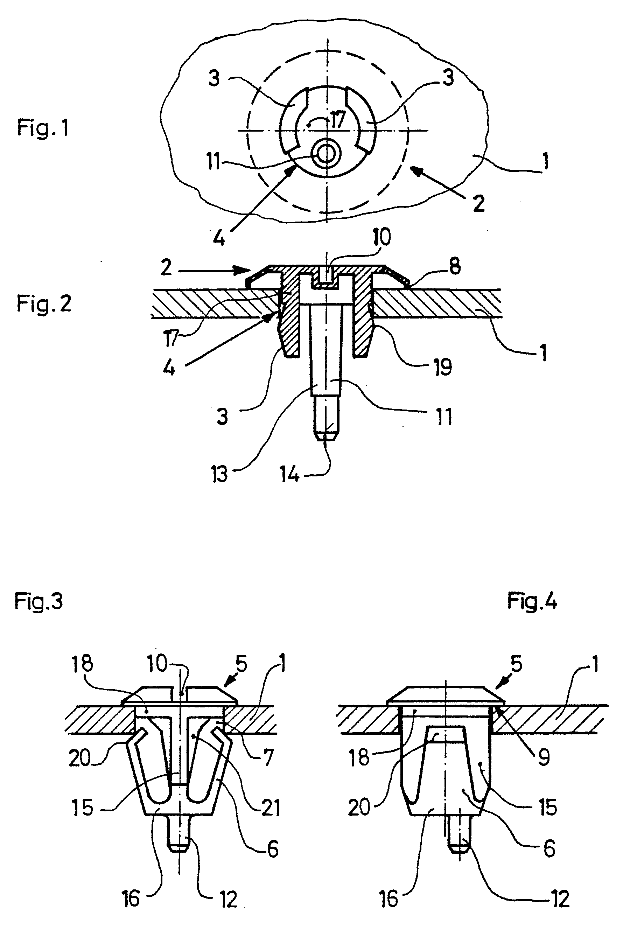

Fig. 1 zeigt einen Teil einer Frontscheibe 1 eines nicht näher dargestellten Messgerätes. In die Frontscheibe 1 ist ein Stellelement 2 mittels Haltestegen 3 in einer Öffnung 4 befestigt. Die Haltestege 3 sind an einem zylindrischen Führungsteil 17, das die Öffnung 4 der Frontscheibe 1 ausfüllt, angeordnet. Zwischen den Haltestegen 3 ist ein Verstelldorn 11 aussermittig am Stellelement 2 angeordnet. Das Stellelement 2 ist in der Öffnung 4 der Frontscheibe 1 drehbar. Der Führungsteil 17 verhindert ein Verkanten des Stellelements 2 in der Öffnung 4.

Fig. 2 zeigt die Frontscheibe 1 und das Stellelement 2 im Schnitt. An der freizugänglichen Aussenseite des Messgerätes besitzt das Stellelement 2 eine Ausnehmung 10 für nicht näher dargestellte Schraubendreher. Auf der Aussenseite der Frontscheibe 1 liegt das Stellelement 2 mit einer Dichtfläche 8 auf. Der zylindrische Führungsteil 17 des Stellelements 2 geht in die Haltestege 3 über. Die Haltestege 3 werden bis zu einer Schnappkante 19 kegelförmig im Durchmesser grösser und verringern sich kegelförmig im Durchmesser bis zur Gesamthöhe der Haltestege 3. Die Schnappkante 19 verankert das Stellelement 2 nach der Montage in der Frontscheibe 1. Während der Montage werden die Haltestege 3 zusammengedrückt. Wenn die Endposition des Stellelementes 2 in der Frontscheibe 1 erreicht ist, hat die Schnappkante etwa wieder ihren ursprünglichen Durchmesser. Der Verstelldorn 11 weist unterschiedliche Durchmesser 13, 14 auf.

Fig. 3 zeigt eine zweite Ausführung eines Stellelementes 5 in der Frontscheibe 1. Das Stellelement 5 hat ein Führungsteil 18, das eine Öffnung 7 in der Frontscheibe 1 ausfüllt. Am Führungsteil 18 ist mittig ein Verbindungssteg 15 angeordnet, der in eine kreisförmige Platte 16 übergeht. An dieser Platte 16 sind zwei Haltestege 6 gegenüberliegend angeordnet. Die Haltestege 6 weisen Schnappschrägen 20 zur Befestigung des Justierelementes 5 an der Frontscheibe 1 auf. Nach dem Einsetzen des Stellelementes 5 in die Frontscheibe 1 rasten die Schnappschrägen 20 hinter die Frontscheibe 1. Der Verbindungssteg 15 ist mit seitlichen Versteifungsstegen 21 zusätzlich ausgerüstet. An der Platte 16 ist ein besonders kurzer Verstelldorn 12 aussermittig angeordnet.

Fig. 4 zeigt eine zweite Seitenansicht des Stellelements 5 in der Frontscheibe 1. Hier ist besonders die kleine Dichtfläche 9 des Stellelements 5 zu erkennen. Die Haltestege 6 mit den Schnappschrägen 20 verjüngen sich von der unteren Platte 16 kegelförmig nach oben. Die Haltestege 6 verteilen die Anpresskräfte gleichmässig auf die Frontscheibe 1.

Der Verbindungssteg 15 ist im Bereich der Platte 16 seitlich angeschrägt, dies erleichtert das Einsetzen des Stellelements 5 in die Öffnung 7 der Frontscheibe 1.

**Patentansprüche**

1. Justiervorrichtung mit Exzenter für Zeiger von Messgeräten, bei der ein einteiliges Stellelement mit einem zylindrischen Führungsteil in einer Öffnung einer Frontscheibe des Messgerätes selbsthaltend, drehbeweglich angeordnet ist, und eine durch ein Kopfteil gebildete Dichtfläche auf der Aussenseite der Frontscheibe aufliegt und ein exzentrisch angeordneter Verstelldorn im Inneren des Messgerätes auf ein zu justierendes Element einwirkt, dadurch gekennzeichnet, dass am Stellelement (2, 5) federnde Haltestege (3, 6) mit Schnappschrägen (19, 20) angeformt sind, das Stellelement (2, 5) sich entlang der Haltestege (3, 6) in seinem Durchmesser keilförmig oder kegelförmig ändert und die federnden Haltestege (3, 6) nach der Montage, bei der sie zusammengedrückt werden, mit ihren Schnappschrägen (19, 20) hinter der Frontscheibe (1) einrasten und dass der Verstelldorn (11) die Haltestege (3, 6) überragt.

2. Justiervorrichtung nach Anspruch 1, dadurch gekennzeichnet, dass die Haltestege (3) kreis- und stegförmig am Führungsteil (17) des Stellelementes (2) angeordnet sind und dass deren Aussenfläche zu einer Schnappkante (19) im Durchmesser keilförmig grösser werden und von der Schnappkante (19) bis zur Gesamthöhe der Haltestege (3) im Durchmesser kleiner werden.

3. Justiervorrichtung nach Anspruch 1 und 2, dadurch gekennzeichnet, dass der Verstelldorn (11) am Führungsteil (17) axial gerichtet, zwischen den Haltestegen (3) befestigt ist.

4. Justiervorrichtung nach Anspruch 1, dadurch gekennzeichnet, dass am Führungsteil (18) des Stellelements (5) ein Verbindungssteg (15) mittig befestigt ist, der in eine kreisförmige, parallel zum Führungsteil (18) angeordnete Platte (16) übergeht, und dass auf der ersten Seite der Platte (16) in Richtung zur Dichtfläche (9) Haltestege (6) befestigt sind, die kurz vor der Dichtfläche (9) in nach innen weisende kegelförmige Schnappschrägen (20) übergehen.

5. Justiervorrichtung nach Anspruch 1 und 4, dadurch gekennzeichnet, dass der Verstelldorn (12) auf der zweiten Seite der Platte (16) achsparallel, aussermittig am Stellelement (5) angeordnet ist.

**Claims**

1. Adjusting device with eccentric for pointers of measuring instruments, in which a one-part setting element is arranged rotatably and in a self-locking manner by means of a cylindrical guide part in an orifice in a front dial disc of the measuring instrument, a sealing face formed by a head part rests on the outside of the front dial disc, and an eccentrically arranged adjusting pin inside the measuring instrument acts on an element to be adjusted, characterized in that resilient locking webs (3, 6) with snapping slopes (19, 20) are formed on the setting element (2, 5), the diameter of the setting element (2, 5) changes in a wedge-shaped or conical manner along the locking webs (3, 6), and the resilient locking webs (3, 6), after assembly, during which they are pressed together, engage behind the front dial disc (1) by means of their snapp slopes (19, 20), and in that the adjusting pin (11) projects beyond the locking webs (3, 6).

2. Adjusting device according to Claim 1, characterized in that the locking webs (3) are arranged circularly and in web form on the guide part (17) of the setting element (2), and in that the diameter of their outer face increases in a wedge-shaped manner up to a snapping edge (19) and decreases from the snapping edge (19) up to the total height of the locking webs (3).

3. Adjusting device according to Claims 1 and 2, characterized in that the adjusting pin (11) is fastened to the guide part (17) between the locking webs (3) so as to be directed axially.

4. Adjusting device according to Claim 1, characterized in that a connecting web (15) is fastened centrally to the guide part (18) of the setting element (5) and merges into a circular plate (16) arranged parallel to the guide part (18), and in that locking webs (6) are fastened on the first side of the plate (16) in the direction of the sealing face (9) and shortly before the sealing face (9) merge into conical snapping slopes (20) pointing inwards.

5. Adjusting device according to Claims 1 and 4, characterized in that the adjusting pin (12) is arranged eccentrically on the setting element (5) on the second side of the plate (6) so as to be parallel to the axis of the latter.

**Revendications**

1. Dispositif d'ajustage à excentrique pour les aiguilles d'appareils de mesure, dans lequel un élément de positionnement d'une seule pièce avec partie cylindrique de guidage est monté mobile en rotation et autoportant dans une ouverture d'une plaque frontale de l'appareil de mesure, une surface d'étanchéité formée par une partie de tête repose sur la face extérieure de ladite plaque frontale et un doigt d'entraînement disposé excentriquement agit à l'intérieur de l'appareil de mesure sur un élément à ajuster, caractérisé par le fait que des branches de maintien élastiques (3, 6) avec des rampes d'enclenchement (19, 20) sont formées sur l'élément de positionnement (2, 5), que ce dernier change de diamètre en forme de coin ou de cône le long desdites branches de maintien (3, 6), que, après le montage où elles sont comprimées, ces mêmes branches de maintien élastiques (3, 6) s'enclenchent par leur rampes (19, 20) derrière la plaque frontale (1) et que le doigt d'entraînement (11) dépasse les branches de maintien (3, 6).

2. Dispositif d'ajustage selon la revendication 1 caractérisé par le fait que les branches de maintien (3) sont disposées à la manière de segments circulaires sur la partie cylindrique de guidage (17) de l'élément de positionnement (2) et que leur surface extérieure augmente de diamètre en forme de coin vers une arête d'enclenchement (19) et diminue de diamètre de cette arête (19) jusqu'à la hauteur totale des branches de maintien (3).

3. Dispositif d'ajustage selon l'une des revendications 1 et 2 caractérisé par le fait que le doigt d'entraînement (1) est fixé avec direction axiale sur la partie cylindrique de guidage (17) entre les branches de maintien (3).

4. Dispositif d'ajustage selon la revendication 1 caractérisé par le fait que sur la partie cylindrique de guidage (18) de l'élément de positionnement (5) est fixée en position médiane une branche de jonction (15) qui se poursuit en une plaque circulaire (16) disposée parallèlement à ladite partie de guidage (18) et que sur la première face de la plaque (16) sont fixées en direction de la surface d'étanchéité (9) des branches de maintien (6) qui, peu avant ladite surface d'étanchéité (9), s'achèvent en des rampes d'enclenchement tronconiques (20) dirigées vers l'intérieur.

5. Dispositif d'ajustage selon l'une des revendications 1 et 4 caractérisé par le fait que le doigt d'entraînement (12) est disposé en parallélisme axial et position excentrée par rapport à l'élément de positionnement (5) sur la seconde face de la plaque (16).

Fig.1

Fig.2

Fig.3

Fig.4